# EUROPÄISCHE PATENTSCHRIFT

(11) **EP 4 423 825 B1**
(45) Veröffentlichungstag und Bekanntmachung des Hinweises auf die Patenterteilung: **16.07.2025**
(21) Anmeldenummer: 22797791.5
(22) Anmeldetag: 27.10.2022
(51) Int. Cl.: C25B 9/23, H01M 8/10, H01M 8/0273, H01M 8/1004

(54) **VERFAHREN UND VORRICHTUNG ZUR HERSTELLUNG VON MEMBRAN-BAUGRUPPEN**
METHOD AND DEVICE FOR PRODUCING MEMBRANE ASSEMBLIES
PROCÉDÉ ET DISPOSITIF DE PRODUCTION D'ENSEMBLES À MEMBRANE

(30) Priorität: 29.10.2021 DE 102021212252
(43) Veröffentlichungstag der Anmeldung: 04.09.2024
(73) Patentinhaber: OPTIMA life science GmbH, 74523 Schwäbisch Hall (DE)
(72) Erfinder: DYLLA, Norbert, 74541 Vellberg (DE); JANSEN, Johannes, 74545 Michelfeld (DE)
(74) Vertreter: Patentanwälte Ruff, Wilhelm, Beier, Dauster & Partner mbB
(86) Internationale Anmeldenummer: PCT/EP2022/080142
(87) Internationale Veröffentlichungsnummer: WO 2023/073138

(56) Entgegenhaltungen:
- EP-A1- 3 823 068
- DE-A1- 102016 000 974
- US-A1- 2008 145 712

## Beschreibung

Die Erfindung betrifft ein Verfahren und eine Vorrichtung zur Herstellung von Membran-Baugruppen als Rollenware.

Bei der Membran-Baugruppe handelt es sich in einer Ausgestaltung um eine Membran-Elektroden-Anordnung (kurz MEA) oder Teilen davon für eine Brennstoffzelle oder einen Elektrolyseur. Eine MEA umfasst in einer Ausgestaltung eine Katalysator-beschichtete Membran (engl. Catalyst Coated Membrane, kurz CCM), an welcher einseitig oder beidseitig Randverstärkungen oder Rahmen (engl. Frame oder rim) aus kostengünstigerem und widerstandsfähigerem Material vorgesehen sind. Eine derartige MEA wird auch als drei Schichten MEA (Engl. 3 layer MEA, kurz 3L- MEA) bezeichnet. Für einen weiteren Aufbau werden an Außenseiten der 3L-MEA zwei als Kathode und Anode gestaltete Elektroden, welche in einer Ausgestaltung in einem Verbund mit zwei Gasdiffusionslagen (kurz GDL) bereitgestellt werden, angebracht. Der Aufbau kann dabei in einem Prozess mit der Herstellung der 3L-MEA oder in einem räumlich und/oder zeitlich getrennten Prozess erfolgen. In einer anderen Ausgestaltung wird eine MEA umfassend eine Membran und zwei daran angeordnete Elektroden bereitgestellt, wobei an dieser MEA einseitig oder beidseitig Randverstärkungen oder Rahmen angebracht werden.

Daneben sind Membran-Baugruppen für andere Anwendungen bekannt, beispielsweise für eine Flüssigbatterie (Redox-Flow-Batterie) oder Membran-basierte Luftbefeuchter.

Aus US 2008/145712 A1 sind ein Verfahren und eine Vorrichtung zur Herstellung von Brennstoffzellenkomponenten als Rollenware bekannt. In eine erste und eine zweite Dichtungsbahn, die jeweils Klebstoffe enthalten, werden mit Abstand voneinander Öffnungen geschnitten. Die erste und die zweite Dichtungsbahn werden auf Förderbändern zu einer Klebestation transportiert. Eine Membranbahn, die mindestens eine Elektrolytmembran enthält, wird ebenfalls zu der Klebestation transportiert. In der Klebestation wird eine abgedichtete Membranbahn gebildet, indem die erste und die zweite Dichtungsbahn an der Membranbahn befestigt werden. Die erste Dichtungsbahn wird über die Klebeschicht der ersten Dichtungsbahn an einer ersten Oberfläche der Membranbahn angebracht. Die zweite Dichtungsbahn wird über die Klebeschicht der zweiten Dichtungsbahn an einer zweiten Oberfläche der Membranbahn befestigt.

Aus EP 3 823 068 A1 sind eine Vorrichtung und ein Verfahren zur Herstellung einer MEA, wobei an beiden Seiten der MEA jeweils ein Dichtungsrahmen angebracht werden. Für den ersten Dichtungsrahmen werden in eine zwischen einer Trägerschicht und einem Schutzfilm angeordnete Dichtungsbahn aus der Seite des Schutzfilms Konturschnitte eingebracht und anschließend der Schutzfilm abgezogen, wobei ein Stanzrest an der Materialbahn verbleibt. Die MEA wird mit dem Materialverbund umfassend die Trägerschicht, die eingeschnittene Materialbahn und den Stanzrest verbunden.

Aus DE 10 2016 000 974 A1 sind ein Verfahren und eine Vorrichtung zum Herstellen einer MEA für eine Brennstoffzelle bekannt, bei welchem eine durchgängige Materialbahn bereitgestellt wird, welche eine Mehrzahl von Bearbeitungsstationen durchläuft. Durch einen Teil der Materialbahn wird eine erste Komponente der MEA gebildet. Zumindest eine zweite Komponente der MEA wird im Bereich der ersten Komponente mit der Materialbahn verbunden. Hierbei wird die Materialbahn an einer Außenseite eines Zylinders angeordnet. Die zumindest eine zweite Komponente wird im Bereich der ersten Komponente mit der Materialbahn verbunden, während der Bereich der ersten Komponente mit dem Zylinder um eine Drehachse des Zylinders rotiert.

Aus DE 10 2020 206 609 A1 sind ein Verfahren und eine Vorrichtung zur Herstellung von Membran-Baugruppen als Rollenware bekannt, wobei ein Materialverbund umfassend ein Rahmenmaterial und einen Schutzfilm bereitgestellt wird und der Schutzfilm vor einem Ablegen des Rahmenmaterials auf einem Vakuumförderer von dem Rahmenmaterial delaminiert wird. Auf das Rahmenmaterial werden Zuschnitte einer Elektrodenmembranfolie abgelegt.

### AUFGABE UND LÖSUNG

Es ist eine Aufgabe, ein Verfahren und eine Vorrichtung zur Herstellung von Membran-Baugruppen als Rollenware mit einer verbesserten Stabilität zu schaffen.

Diese Aufgabe wird gelöst durch die Gegenstände mit den Merkmalen der Ansprüche 1 und 9. Vorteilhafte Ausgestaltungen ergeben sich aus den Unteransprüchen.

Gemäß einem ersten Aspekt wird ein Verfahren zum Herstellen einer Membran-Baugruppe als Rollenware, insbesondere einer Membran-Elektroden-Anordnung (MEA), geschaffen umfassend: Bereitstellen eines ersten Materialverbunds als Rollenware umfassend ein erstes Rahmenmaterial und einen Schutzfilm, wobei in das erste Rahmenmaterial von einer dem Schutzfilm gegenüberliegenden Seite des Materialverbunds das erste Rahmenmaterial durchtrennende Konturschnitte unter Bildung von Stanzresten eingebracht sind, und wobei die Konturschnitte eingebracht sind, ohne den Schutzfilm zu durchtrennen, und Aufbauen der Membran-Baugruppe als Rollenware, wobei der erste Materialverbund an eine Vakuumtransporteinrichtung übertragen wird, wobei bei oder nach einem Übertragen des ersten Materialverbunds an die Vakuumtransporteinrichtung eine Delamination des Schutzfilms mit den Stanzresten von dem ersten Rahmenmaterial erfolgt, und wobei vor oder bei einem Verlassen der Vakuumtransporteinrichtung eine Lamination der Membran-Baugruppe mit einer geschlossenen Trägerbahn erfolgt.

Die Begriffe "erster" und "zweiter" dienen im Zusammenhang mit der Anmeldung lediglich zur Unterscheidung und geben keine Reihenfolge an. Auch verlangen die Begriffe "erste", "erster" etc. nicht zwangsweise ein Vorhandensein von zweiten baugleichen oder ähnlichen Elementen. Die Begriffe "ein", "einer" etc. werden im Zusammenhang mit der Anmeldung als unbestimmte Artikel und nicht als Zählwörter verwendet.

Ein bahnförmiges Rahmenmaterial, ein bahnförmiger Schutzfilm, eine Trägerbahn oder ein anderes bahnförmiges Material werden im Zusammenhang mit der Anmeldung als Materialbahnen bezeichnet. Als Lamination wird dabei im Zusammenhang mit der Anmeldung sowohl ein temporäres als auch ein dauerhaftes Verbinden von Materialbahnen bezeichnet. Entsprechend wird ein Ablösen oder Trennen der Materialbahnen als Delamination bezeichnet.

Das Rahmenmaterial ist dabei vor einem Übertragen an die Vakuumtransporteinrichtung mittels des Schutzfilms stabilisiert. Nach dem Übertragen erfolgt eine Stabilisierung des Rahmenmaterials mittels der Vakuumtransporteinrichtung. Um eine ausreichende Stabilisierung sicherzustellen, ist vorgesehen, dass der Schutzfilm erst bei oder nach dem Übertragen des ersten Materialverbunds an die Vakuumtransporteinrichtung von dem ersten Rahmenmaterial delaminiert wird. Bei einem Verlassen der Vakuumtransporteinrichtung ist die Membran-Baugruppe mittels der geschlossenen Trägerbahn stabilisiert. Die mittels der Trägerbahn stabilisierte Membran-Baugruppe wird in einer Ausgestaltung als Rollenware für eine örtlich und/oder räumlich getrennte Weiterverarbeitung zwischengespeichert. In anderen Ausgestaltungen erfolgt eine unmittelbare Weiterverarbeitung in einer bahnverarbeitenden Anlage.

Als geschlossene Trägerbahn wird dabei eine Materialbahn bezeichnet, welche keine oder nur unwesentliche Einschnitte oder Durchbrüche und somit eine hohe Stabilität gegen einen Verzug bei einer Verarbeitung aufweist.

Die Vakuumtransporteinrichtung umfasst in einer Ausgestaltung ein Vakuumtransportband, mittels welchem eine lineare Förderung erfolgt. Alternativ oder zusätzlich umfasst die Vakuumtransporteinrichtung in einer anderen Ausgestaltung eine Vakuumwalze.

In einer Ausgestaltung erfolgt ein Aufbau der Membran-Baugruppe auf dem an die Vakuumtransportrichtung übertragenen ersten Rahmenmaterial. Die Vakuumtransportrichtung umfasst zu diesem Zweck in einer Ausgestaltung mindestens ein Vakuumtransportband, auf welchem die Schichten der Membran-Baugruppe stapelbar sind.

Bei den Membran-Zuschnitten handelt es sich in einer Ausgestaltung um eine CCM für eine MEA. In anderen Ausgestaltungen handelt es sich bei dem Membran-Zuschnitten um eine Membran mit zwei Elektroden.

Die Konturschnitte werden in Ausgestaltungen mittels eines Stanzverfahrens, insbesondere mittels Rotationsstanzen, in das erste Rahmenmaterial eingebracht. Der Schutzfilm dient dabei in vorteilhaften Ausgestaltungen als Schneidunterlage. Ein Einbringen der Konturschnitte erfolgt dabei in einer Ausgestaltung in einem gemeinsamen Prozess mit einer Weiterverarbeitung des Materialverbunds. In anderen Ausgestaltungen erfolgt eine Vorbereitung des Materialverbunds zeitlich und/oder räumlich getrennt zu einer Weiterverarbeitung.

In einer Ausgestaltung wird der erste Materialverbund mit dem ersten Rahmenmaterial unmittelbar auf dem Vakuumtransportband abgelegt. Als unmittelbares Ablegen wird im Zusammenhang mit der Anmeldung ein Ablegen ohne eine dazwischen angeordnete Trägerbahn oder einen dazwischen angeordneten Schutzfilm bezeichnet. Durch eine unmittelbare Ablage kann ein Materialaufwand verringert werden. Eine Stabilisierung der auf dem ersten Rahmenmaterial aufgebauten Membran-Baugruppe ist dabei mittels des Vakuumtransportbands und mittels der Trägerbahn, mit welcher die Membran-Baugruppe vor oder beim Verlassen des Vakuumtransportbands laminiert wird, sichergestellt.

Die Vakuumtransporteinrichtung wird dabei in einer Ausgestaltung betrieben, um die Delamination des Schutzfilms mit den Stanzresten von dem ersten Rahmenmaterial zu unterstützen. In einer Ausgestaltung umfasst die Vakuumtransporteinrichtung zu diesem Zweck eine Schaltleiste, welche betrieben wird, um eine Ansaugwirkung der Vakuumtransporteinrichtung temporär und/oder örtlich begrenzt zu reduzieren. Die Schaltleiste weist in einer Ausgestaltung Düsen auf, mittels welcher für eine Reduzierung der Ansaugwirkung ein Fluid, insbesondere Luft, ausgeblasen werden kann.

Das Verfahren umfasst in einer Ausgestaltung weiter ein Bereitstellen eines zweiten bahnförmigen Materialverbunds umfassend ein zweites Rahmenmaterial und die Trägerbahn, und ein Ablegen des zweiten Materialverbunds auf der Membran-Baugruppe umfassend das erste Rahmenmaterial und die Membran-Zuschnitte, wobei die Trägerbahn an einer von dem ersten Rahmenmaterial abgewandten Seite angeordnet wird.

In einer Ausgestaltung weist die Trägerbahn adhäsive Eigenschaften auf, wobei die Trägerbahn in einer Ausgestaltung rückstandslos von dem zweiten Rahmenmaterial delaminierbar ist, so dass mittels der Delamination freigelegte Oberfläche des zweiten Rahmenmaterials keine adhäsiven Eigenschaften aufweist. In anderen Ausgestaltungen wird die freigelegte Oberfläche in einer Weiterverarbeitung mit weiteren Schichten verbunden, so dass adhäsive Rückstände akzeptabel sind.

In einer Ausgestaltung umfasst das Bereitstellen des zweiten Materialverbunds ein Einbringen von das zweite Rahmenmaterial durchtrennenden Konturschnitten in das zweite Rahmenmaterial. Dabei ist in einer Ausgestaltung vorgesehen, dass in den zweiten Materialverbund umfassend das zweite Rahmenmaterial und die Trägerbahn das Rahmenmaterial durchtrennende Konturschnitte unter Bildung von Stanzresten von einer der Trägerbahn gegenüberliegenden Seite des Materialverbunds in das zweite Rahmenmaterial eingebracht werden, und die Konturschnitte eingebracht werden, ohne die Trägerbahn zu durchtrennen.

In einer anderen Ausgestaltung ist vorgesehen, dass das zweite Rahmenmaterial auf einem Schutzfilm bereitgestellt wird, wobei in das zweite Rahmenmaterial von einer dem Schutzfilm gegenüberliegenden Seite das zweite Rahmenmaterial durchtrennende Konturschnitte unter Bildung von Stanzresten eingebracht werden, wobei die Konturschnitte eingebracht werden, ohne den Schutzfilm zu durchtrennen, wobei auf einer dem Schutzfilm gegenüberliegenden Seite des zweiten Rahmenmaterials die Trägerbahn angebracht wird und vor dem Ablegen des zweiten Materialverbunds umfassend das zweite Rahmenmaterial und die Trägerbahn auf der Membran-Baugruppe der Schutzfilm delaminiert wird.

Die Trägerbahn und ein an dem zweiten Rahmenmaterial angeordneter Schutzfilm sind dabei in einer Ausgestaltung baugleich oder zumindest aus einem gleichen Material gefertigt. In anderen Ausgestaltungen sind die Trägerbahn und der Schutzfilm aus unterschiedlichen Materialien gefertigt.

Die Konturschnitte werden in Ausgestaltungen mittels eines Stanzverfahrens, insbesondere mittels Rotationsstanzen, in das zweite Rahmenmaterial eingebracht. Die Trägerbahn dient dabei in vorteilhaften Ausgestaltungen als Schneidunterlage. Ein Einbringen der Konturschnitte erfolgt dabei in einer Ausgestaltung in einem gemeinsamen Prozess mit einer Weiterverarbeitung des zweiten Materialverbunds. In anderen Ausgestaltungen erfolgt eine Vorbereitung des zweiten Materialverbunds zeitlich und/oder räumlich getrennt zu einer Weiterverarbeitung.

In einer alternativen Ausgestaltung umfasst das Verfahren weiter ein Bereitstellen eines zweiten Rahmenmaterials, und Ablegen des zweiten Rahmenmaterials auf der Membran-Baugruppe umfassend das erste Rahmenmaterial und die Membran-Zuschnitte, wobei nach dem Ablegen des zweiten Rahmenmaterials eine Lamination mit der Trägerbahn erfolgt. In anderen Worten wird dabei die Trägerbahn nach dem zweiten Rahmenmaterial an der Membran-Baugruppe angebracht.

Das Bereitstellen des zweiten Rahmenmaterials umfasst dabei ein Einbringen von das zweite Rahmenmaterial durchtrennenden Konturschnitten in das zweite Rahmenmaterial.

Dabei ist in einer Ausgestaltung vorgesehen, dass in das zweite Rahmenmaterial das Rahmenmaterial durchtrennende Konturschnitte unter Entfernen von Stanzresten eingebracht werden. In anderen Worten wird dabei auf eine Schutzfolie und/oder eine Trägerbahn für das zweite Rahmenmaterial verzichtet. Die Fenster werden in Ausgestaltungen mittels eines Stanzverfahrens, insbesondere mittels Rotationsstanzen, in das zweite Rahmenmaterial eingebracht. Ein Einbringen der Fenster erfolgt dabei in einer Ausgestaltung in einem gemeinsamen Prozess mit einer Weiterverarbeitung des zweiten Rahmenmaterials.

In einer alternativen Ausgestaltung wird das zweite Rahmenmaterial auf einem Schutzfilm bereitgestellt, wobei in das zweite Rahmenmaterial von einer dem Schutzfilm gegenüberliegenden Seite das zweite Rahmenmaterial durchtrennende Konturschnitte unter Bildung von Stanzresten eingebracht werden, wobei die Konturschnitte eingebracht werden, ohne den Schutzfilm zu durchtrennen, und der Schutzfilm vor dem Ablegen des zweiten Materialverbunds auf der Membran-Baugruppe delaminiert wird.

In einer Ausgestaltung umfasst das Verfahren weiter ein Fixieren der Membran-Baugruppe umfassend das erste Rahmenmaterial, die Membran-Zuschnitte und das zweite Rahmenmaterial durch Aktivieren einer an dem ersten Rahmenmaterial und/oder an dem zweiten Rahmenmaterial vorgesehenen Klebeschicht. In einer Ausgestaltung wird auf das zweite Rahmenmaterial an einer dem ersten Rahmenmaterial zugewandten Seite unmittelbar vor einer Lamination eine Klebeschicht aufgebracht. In anderen Ausgestaltungen ist zusätzlich oder alternativ an dem ersten Rahmenmaterial eine Klebeschicht vorgesehen, welche durch die Delamination des Schutzfilms freigelegt wird. Dabei ist in einer Ausgestaltung ausschließlich an dem ersten Rahmenmaterial eine Klebeschicht vorgesehen, welche durch die Delamination des Schutzfilms freigelegt wird. Dadurch kann auf einen Klebstoffauftrag bei einer Verarbeitung der Materialbahnen verzichtet werden. Das zweite Rahmenmaterial wird dabei mittelbar über das erste Rahmenmaterial mit dem Membran-Zuschnitt verbunden. In anderen Ausgestaltungen ist an dem zweiten Rahmenmaterial ebenfalls eine Klebeschicht vorgesehen, welche durch die Delamination des Schutzfilms freigelegt wird.

Gemäß einem zweiten Aspekt wird eine Vorrichtung zum Herstellen einer Membran-Baugruppe, insbesondere einer Membran-Elektroden-Anordnung (MEA), geschaffen, umfassend eine erste Materialzufuhreinrichtung, die eingerichtet ist, um einen ersten Materialverbund als Rollenware umfassend ein erstes Rahmenmaterial und einen Schutzfilm bereitzustellen, wobei in das erste Rahmenmaterial von einer dem Schutzfilm gegenüberliegenden Seite des Materialverbunds das erste Rahmenmaterial durchtrennende Konturschnitte unter Bildung von Stanzresten eingebracht sind, und wobei die Konturschnitte eingebracht sind, ohne den Schutzfilm zu durchtrennen, eine Laminationsstation, die eingerichtet ist, Membran-Zuschnitte mit dem ersten Rahmenmaterial zu laminieren, und eine Vakuumtransporteinrichtung, wobei die Vorrichtung eingerichtet ist, um den ersten Materialverbund an die Vakuumtransporteinrichtung zu übertragen, wobei die Vorrichtung weiter eine an der Vakuumtransporteinrichtung angeordnete Delaminationsstation für eine Delamination des Schutzfilms mit den Stanzresten von dem ersten Rahmenmaterial bei oder nach einem Übertragen des ersten Materialverbunds an die Vakuumtransporteinrichtung, und eine an der Vakuumtransporteinrichtung angeordnete Laminationsstation für eine Lamination der Membran-Baugruppe mit einer geschlossenen Trägerbahn vor oder bei einem Verlassen des Vakuumtransportbands aufweist.

Die Vorrichtung ist in einer Ausgestaltung eingerichtet, um den ersten Materialverbund mit dem ersten Rahmenmaterial unmittelbar an die Vakuumtransporteinrichtung zu übertragen.

Die Vakuumtransporteinrichtung ist in einer Ausgestaltung betreibbar, um die Delamination des Schutzfilms mit den Stanzresten von dem ersten Rahmenmaterial zu unterstützen. Die Vakuumtransporteinrichtung weist in einer Ausgestaltung zu diesem Zweck eine Schaltleiste auf, welche betreibbar ist, um eine Ansaugwirkung der Vakuumtransporteinrichtung temporär und/oder örtlich begrenzt zu reduzieren.

In einer Ausgestaltung der Vorrichtung ist eine zweite Materialzufuhreinrichtung vorgesehen, die eingerichtet ist, um einen zweiten bahnförmigen Materialverbund umfassend ein zweites Rahmenmaterial und die Trägerbahn bereitzustellen. Die zweite Materialzufuhreinrichtung umfasst in einer Ausgestaltung weiter die Laminationsstation, um den zweiten Materialverbund auf der Membran-Baugruppe umfassend das erste Rahmenmaterial und die Membran-Zuschnitte abzulegen, derart dass die Trägerbahn an einer von dem ersten Rahmenmaterial abgewandten Seite angeordnet ist.

In einer Ausgestaltung ist dabei vorgesehen, dass die zweite Materialzufuhreinrichtung eine Stanzeinrichtung zum Einbringen von das zweite Rahmenmaterial durchtrennenden Konturschnitten in das zweite Rahmenmaterial umfasst.

Die Stanzeinrichtung ist in einer Ausgestaltung eingerichtet, um das Rahmenmaterial durchtrennende Konturschnitte unter Bildung von Stanzresten von einer der Trägerbahn gegenüberliegenden Seite des zweiten Materialverbunds in das zweite Rahmenmaterial einzubringen, ohne die Trägerbahn zu durchtrennen.

In einer anderen Ausgestaltung ist die Stanzeinrichtung eingerichtet, um in ein auf einem Schutzfilm bereitgestelltes zweites Rahmenmaterial von einer dem Schutzfilm gegenüberliegenden Seite das zweite Rahmenmaterial durchtrennende Konturschnitte unter Bildung von Stanzresten einzubringen, ohne den Schutzfilm zu durchtrennen, wobei an der Materialzufuhreinrichtung eine Trägerbahn-Laminationsstation vorgesehen ist, die eingerichtet ist, um die Trägerbahn auf einer dem Schutzfilm gegenüberliegenden Seite mit dem zweiten Rahmenmaterial zu laminieren, und an der Materialzufuhreinrichtung eine Schutzfilm-Delaminationsstation vorgesehen ist, die eingerichtet ist, um den Schutzfilm vor dem Ablegen des zweiten Materialverbunds auf der Membran-Baugruppe zu delaminieren.

In einer alternativen Ausgestaltung ist eine alternative zweite Materialzufuhreinrichtung vorgesehen, die eingerichtet ist, um ein zweites Rahmenmaterial bereitzustellen, und die eingerichtet ist, um das zweite Rahmenmaterial auf der Membran-Baugruppe umfassend das erste Rahmenmaterial und die Membran-Zuschnitte abzulegen, wobei stromabwärts der zweiten Materialzuführeinrichtung die Laminationsstation für eine Lamination der Membran-Baugruppe umfassend das erste Rahmenmaterial, die Membran-Zuschnitte und das zweite Rahmenmaterial mit der Trägerbahn vorgesehen ist.

Die Trägerbahn wird dabei in einer Ausgestaltung an einer von dem ersten Rahmenmaterial abgewandten Seite des zweiten Rahmenmaterials angebracht. In einer anderen Ausgestaltung wird die Trägerbahn an einer von dem zweiten Rahmenmaterial abgewandten Seite des ersten Rahmenmaterials angebracht.

Die zweite Materialzufuhreinrichtung umfasst dabei eine Stanzeinrichtung zum Einbringen von das zweite Rahmenmaterial durchtrennenden Konturschnitten in das zweite Rahmenmaterial.

In einer Ausgestaltung ist die Stanzeinrichtung eingerichtet, um in das zweite Rahmenmaterial das Rahmenmaterial durchtrennende Konturschnitte unter Entfernen von Stanzresten einzubringen. Bei dieser Gestaltung erfolgt eine Bearbeitung des zweiten Rahmenmaterials ohne Schutzfilm.

In einer anderen Ausgestaltung ist die Stanzeinrichtung eingerichtet, um in ein auf einem Schutzfilm bereitgestelltes zweites Rahmenmaterial von einer dem Schutzfilm gegenüberliegenden Seite das zweite Rahmenmaterial durchtrennende Konturschnitte unter Bildung von Stanzresten einzubringen, ohne den Schutzfilm zu durchtrennen, wobei eine Schutzfilm-Delaminationsstation vorgesehen ist, um den Schutzfilm vor dem Ablegen des zweiten Materialverbunds auf der Membran-Baugruppe zu delaminieren.

Die Vorrichtung umfasst in einer Ausgestaltung weiter eine Fixierstation, die eingerichtet ist, um die Membran-Baugruppe umfassend das erste Rahmenmaterial, die Membran-Zuschnitte und das zweite Rahmenmaterial durch Aktivieren einer an dem ersten Rahmenmaterial und/oder an dem zweiten Rahmenmaterial vorgesehenen Klebeschicht zu fixieren. Die Fixierstation umfasst in einer Ausgestaltung zwei Rollen, wobei die Membran-Baugruppe umfassend das erste Rahmenmaterial, die Membran-Zuschnitte und das zweite Rahmenmaterial mittels der Trägerbahn zwischen den Rollen hindurchgeführt wird.

In Ausgestaltungen, in welchen das zweite Rahmenmaterial ohne Schutzfilm bereitgestellt wird, ist vorzugsweise ausschließlich an dem ersten Rahmenmaterial eine Klebeschicht vorgesehen, welche durch die Delamination des Schutzfilms freilegbar ist. Das zweite Rahmenmaterial wird dabei mittelbar über das erste Rahmenmaterial mit dem Membran-Zuschnitt verbunden.

### KURZBESCHREIBUNG DER ZEICHNUNGEN

Weitere Vorteile und Aspekte der Erfindung ergeben sich aus den Ansprüchen und aus der Beschreibung von Ausführungsbeispielen der Erfindung, die nachfolgend anhand der schematischen Figuren erläutert sind. Dabei zeigen:
- Fig. 1: eine Membran-Baugruppe umfassend einen ersten Rahmen, einen zweiten Rahmen und eine dazwischen angeordnete Membran;
- Fig. 2: eine erste Ausgestaltung einer Vorrichtung zur Herstellung der Membran-Baugruppe gemäß Fig. 1 als Rollenware;
- Fig. 3: eine Vorrichtung zur Delamination einer Trägerbahn von der Membran-Baugruppe gemäß Fig. 1;
- Fig. 4: eine zweite Ausgestaltung einer zweiten Membranzuführeinrichtung für eine Vorrichtung ähnlich Fig. 2;
- Fig. 5: eine dritte Ausgestaltung einer zweiten Membranzuführeinrichtung für eine Vorrichtung ähnlich Fig. 2; und
- Fig. 6: eine vierte Ausgestaltung einer zweiten Membranzuführeinrichtung für eine Vorrichtung ähnlich Fig. 2.

### DETAILLIERTE BESCHREIBUNG DER AUSFÜHRUNGSBEISPIELE

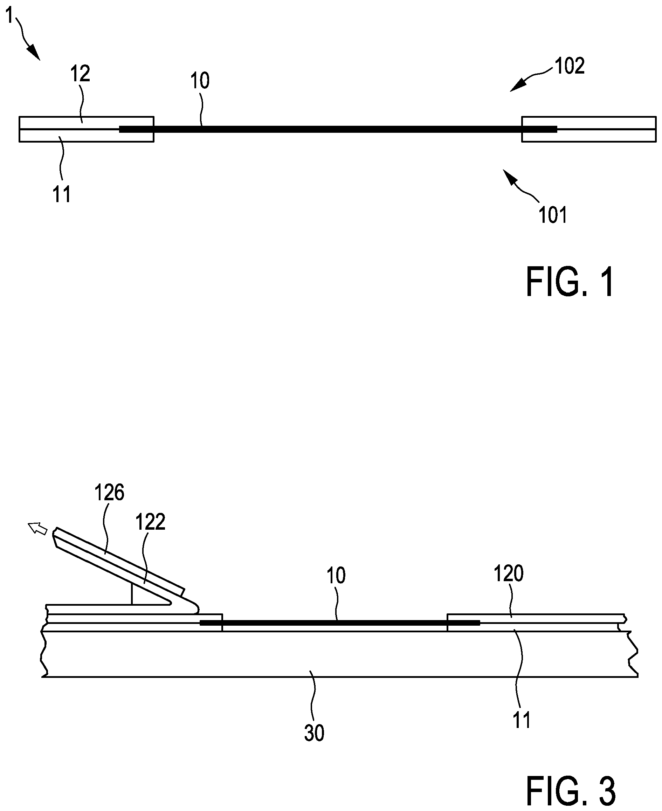

Fig. 1 zeigt schematisch eine Membran-Baugruppen 1 umfassend einen ersten Rahmen 11, einen zweiten Rahmen 12 und eine dazwischen angeordnete Membran 10. Die Rahmen 11, 12 umgeben einen Funktionsbereich der Membran 10 und decken Außenränder der Membran 10 vorzugsweise vollumfänglich ab. Je nach Ausgestaltung dienen die Rahmen 11, 12 als Anschluss für weiterer Bauteile und/oder einer Abdichtung der Membran 10. Die durch die Rahmen 11, 12 begrenzten Ausnehmungen im Bereich der Membran 10 werden im Zusammenhang mit der Anmeldung als Fenster 101, 102 bezeichnet.

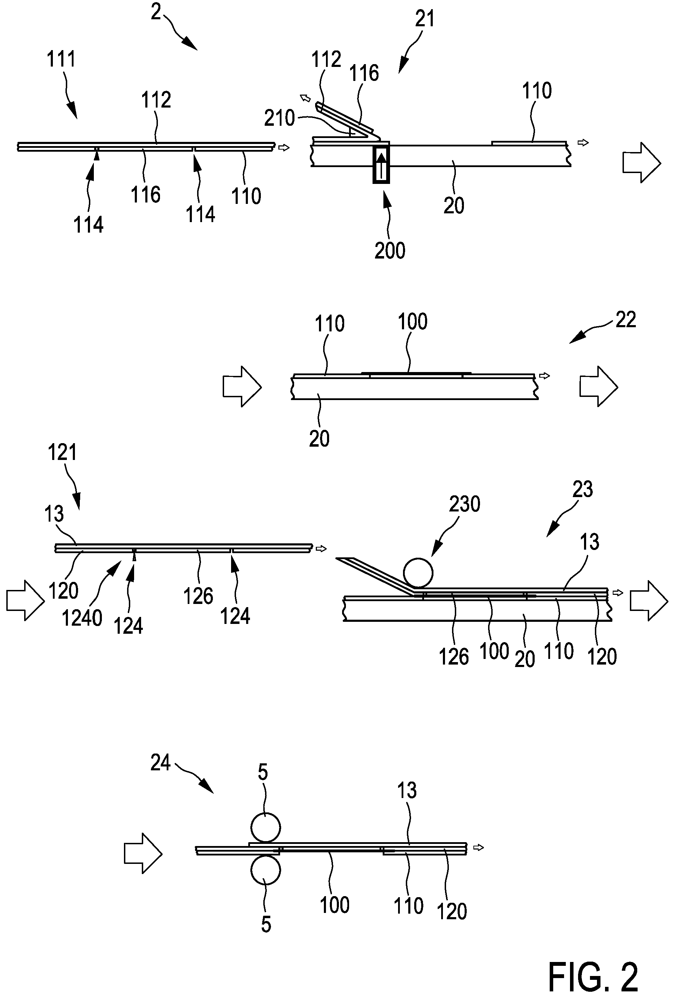

Fig. 2 zeigt ein erstes Ausführungsbeispiel einer Vorrichtung 2 zur Herstellung einer Membran-Baugruppe gemäß Fig. 1, wobei für die Rahmen 11, 12 ein erstes Rahmenmaterial 110 und ein zweites Rahmenmaterial 120 als Rollenware bereitgestellt werden.

Das erste bahnförmigen Rahmenmaterial 110 für den ersten Rahmen 11 wird als Materialverbund 111 mit einem Schutzfilm 112 bereitgestellt. An dem ersten bahnförmigen Rahmenmaterial 110 ist einseitig eine Klebeschicht angebracht, welche mittels des Schutzfilms 112 abgedeckt ist. In das bahnförmige Rahmenmaterial 110 sind Konturschnitte 114 entlang Innenkonturen des ersten Rahmens 11 eingebracht, wobei das Rahmenmaterial 110 mittels der Konturschnitte 114 durchtrennt ist, ohne dass der Schutzfilm 112 durchtrennt ist. Der Schutzfilm 112 dient so zudem auch einer Stabilisierung des ersten bahnförmigen Rahmenmaterial 110. Ein durch den Konturschnitt 114 begrenzter Stanzrest 116 verbleibt bei einer Delamination des Schutzfilms 112 an dem Schutzfilm 112.

Die Vorrichtung 2 umfasst eine Vakuumtransporteinrichtung mit einem Vakuumtransportband 20, wobei der erste Materialverbund 111 an das Vakuumtransportband 20 übertragen wird. An dem Vakuumtransportband ist eine Delaminationsstation 21 vorgesehen, mittels der bei oder nach einem Ablegen des Materialverbund 111 der Schutzfilm 112 mit den Stanzresten 116 von dem ersten Rahmenmaterial 110 abgezogen wird. Die dargestellte Delaminationsstation 21 umfasst eine Delaminationseinrichtung 210, wie beispielsweise eine Delaminationsrolle, einen Delaminationskeil oder ein anderes Umlenkelement für eine Delamination. An dem dargestellten Vakuumtransportband 20 ist eine Schaltleiste 200 vorgesehen, welche betreibbar ist, um eine Ansaugwirkung des Vakuumtransportbands 20 temporär und örtlich begrenzt zu reduzieren, um so eine Delamination des Stanzrest 116 mit dem Schutzfilm 112 zu unterstützen. Die Schaltleiste 200 umfasst zu diesem Zweck in einer Ausgestaltung ansteuerbare Blasdüsen.

Die Stanzreste 116 und der Schutzfilm 112 werden in einer Ausgestaltung in einem nicht dargestellten nachfolgenden Schritt voneinander getrennt, sodass eine sortenreine Wiederaufbereitung des Schutzfilms 112 und der Stanzreste 116 in einem nachfolgenden Recyclingprozess möglich ist.

Das bahnförmige Rahmenmaterial 110 wird unmittelbar, d.h. ohne eine dazwischen angeordnete Trägerbahn, mit einer der Klebeschicht gegenüberliegenden Seite auf dem

Vakuumtransportband 20 abgelegt, wobei nach dem Abziehen des Schutzfilms 112 die Klebeschicht freiliegt.

In einer Laminationsstation 22 werden nachfolgend Membran-Zuschnitte 100 auf dem bahnförmigen Rahmenmaterial 110 abgelegt.

In dem in Fig. 2 dargestellten Ausführungsbeispiel wird das zweite Rahmenmaterial 120 auf einer Trägerbahn 13 als Materialverbund 121 an einer zweiten Materialzuführeinrichtung 23 bereitgestellt.

Die in Fig. 2 dargestellte zweite Materialzuführeinrichtung 23 umfasst eine Stanzeinrichtung 1240, die eingerichtet ist, um in das zweite bahnförmige Rahmenmaterial 120 Konturschnitte 124 entlang Innenkonturen des zweiten Rahmens 12 einzubringen, wobei die Trägerbahn 13 nicht durchtrennt oder beschädigt ist. Die Trägerbahn 13 dient so einer Stabilisierung des zweiten bahnförmigen Rahmenmaterial 120. In dem dargestellten Ausführungsbeispiel verbleibt ein durch den Konturschnitt 124 begrenzter Stanzrest 126 an der Trägerbahn 13.

Die in Fig. 2 dargestellte zweite Materialzuführeinrichtung 23 ist eingerichtet, um den zweiten Materialverbund 121 mit einer der Trägerbahn 13 gegenüberliegenden Seite auf einer Membran-Baugruppe umfassend das ersten Rahmenmaterial 110 und die Membran-Zuschnitte 100 abzulegen. Die zweite Materialzuführeinrichtung 23 umfasst zu diesem Zweck eine Laminationsstation 230, mittels der der zweite Materialverbund 121 umfassend die Trägerbahn 13 mit der Membran-Baugruppe umfassend das erste Rahmenmaterial 110 und die Membran-Zuschnitte 100 laminiert wird. Das zweite Rahmenmaterial 120 wird dabei gemeinsam mit der Trägerbahn 13 abgelegt, so dass die Trägerbahn 13 eine Membran-Baugruppe umfassend das erste Rahmenmaterial 110, die Membran-Zuschnitte 100 und das zweite Rahmenmaterial 120 stabilisiert. In dem dargestellten Ausführungsbeispiel sind dabei die Stanzreste 126 des zweiten Rahmenmaterials 120 zwischen den Membran-Zuschnitten 100 und der Trägerbahn 13 angeordnet, sodass die Membran-Zuschnitte 100 gegenüber der Trägerbahn 13 geschützt sind.

Die mittels der Trägerbahn 13 stabilisierte, als Rollenware vorliegende Membran-Baugruppe kann anschließend dem Vakuumtransportband 20 entnommen werden und beispielsweise einer Fixierstation 24 zugeführt werden, in welcher ein Aushärten der an dem ersten Rahmenmaterial 110 vorgesehenen Klebeschicht erfolgt, um die Membran-Baugruppe umfassend das erste Rahmenmaterial 110, die Membran-Zuschnitte 100 und das zweite Rahmenmaterial 120 zu fixieren. In einer Ausgestaltung erfolgt ein Aushärten unter Druck mittels schematisch dargestellter Druckwalzen 5. Je nach Anwendungsfall erfolgt alternativ oder zusätzlich ein thermisches Aushärten und/oder ein Strahlungshärten der Klebeschicht. Die Membran-Baugruppe wird dabei mittels der Trägerbahn 13 zwischen den Druckwalzen 5 geführt.

In dem in Fig. 2 dargestellten Ausführungsbeispiel ist an einer den Membran-Zuschnitten 100 zugewandten Seite des zweiten Rahmenmaterials 120 keine Klebeschicht vorgesehen. Eine Verbindung des zweiten Rahmenmaterials 120 mit den Membran-Zuschnitten 100 erfolgt dabei mittelbar mittels des ersten Rahmenmaterials 110. In anderen Ausgestaltungen wird an der Materialzuführeinrichtung 23 vor einem Ablegen des zweiten Rahmenmaterials 120 auf das Rahmenmaterial 120 ein Klebstoff aufgetragen.

Der mittels der Trägerbahn 13 stabilisierte, bahnförmige Materialverbund ist anschließend einer bahnverarbeitenden Anlage für eine Weiterverarbeitung zuführbar. Wie schematisch in Fig. 3 dargestellt, wird für eine Weiterverarbeitung die Trägerbahn 13 einschließlich der Stanzreste 126 des zweiten Rahmenmaterials 120 von der Membran-Baugruppe abgezogen. Die Membran-Baugruppe ist dabei in dem dargestellten Ausführungsbeispiel erneut auf einem Vakuumtransportband 30 für eine Stabilisierung angeordnet.

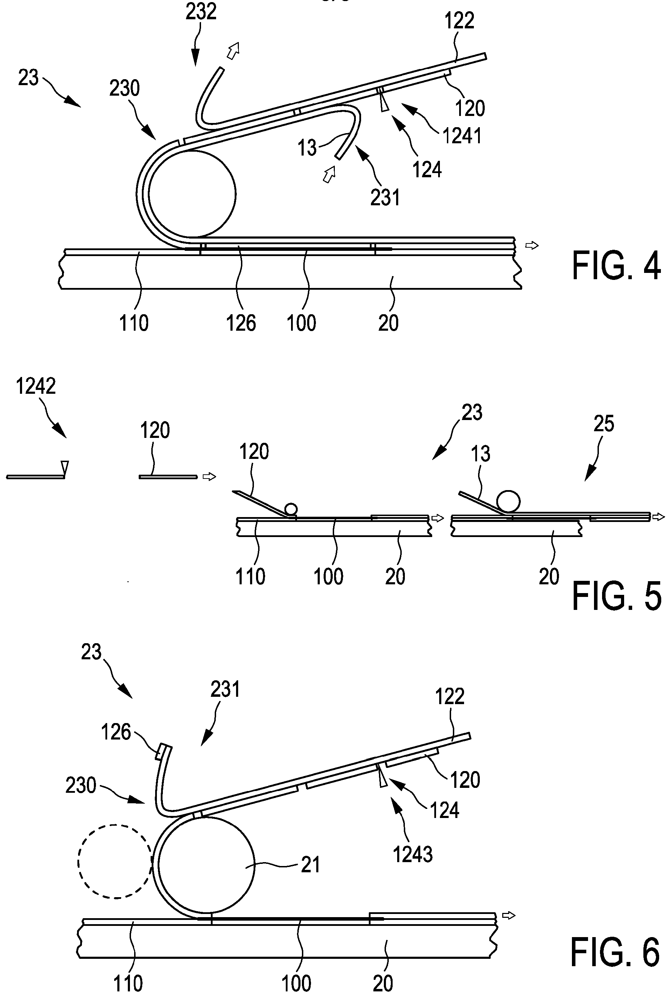

Fig. 4 zeigt eine alternative Gestaltung einer zweiten Materialzuführeinrichtung 23 mit einer Laminationsstation 230 für eine Vorrichtung 2 zur Herstellung einer Membran-Baugruppe ähnlich der Vorrichtung gemäß Fig. 2.

Im Unterschied zu dem Ausführungsbeispiel gemäß Fig. 2 wird bei der Materialzuführeinrichtung 23 gemäß Fig. 4 das zweite Rahmenmaterial 120 auf einem Schutzfilm 122 bereitgestellt. Die Materialzuführeinrichtung 23 umfasst dabei eine Stanzeinrichtung 1241, eine Trägerbahn-Laminationsstation 231 und eine Schutzfilm-Delaminationsstation 232.

Dabei werden mittels der Stanzeinrichtung 1241 in das zweite Rahmenmaterial 120 von einer dem Schutzfilm 122 gegenüberliegenden Seite das zweite Rahmenmaterial 120 durchtrennende Konturschnitte 124 unter Bildung von Stanzresten 126 eingebracht, ohne den Schutzfilm 122 zu durchtrennen. Nach dem Einbringen der Konturschnitte 124 wird auf einer dem Schutzfilm 122 gegenüberliegenden Seite des zweiten Rahmenmaterials 120 die Trägerbahn 13 mittels der Trägerbahn-Laminationsstation 231 angebracht.

Vor dem Ablegen des zweiten Materialverbunds 112 umfassend das Rahmenmaterial 120 und die Trägerbahn 13 auf der Membran-Baugruppe wird der Schutzfilm 122 mittels der Schutzfilm-Delaminationsstation 232 delaminiert.

Die Trägerbahn 13 wird mittels der Laminationsstation 230 gemeinsam mit dem Rahmenmaterial 120 mit der Membran-Baugruppe umfassend das erste Rahmenmaterial 110 und die Membran-Zuschnitte 100 laminiert.

In dem dargestellten Ausführungsbeispiel verbleiben die Stanzreste 126 an der Trägerbahn 13.

In einer alternativen Ausgestaltung werden die Stanzreste 126 mit dem Schutzfilm 122 entfernt. Dabei ist in einer Ausgestaltung an dem zweiten Rahmenmaterial 120 an einer von der Trägerbahn 13 abgewandten Seite ein Klebeschicht aufgebracht, welche vor dessen Delamination durch den Schutzfilm 122 abgedeckt ist.

Fig. 5 zeigt eine weitere alternative Gestaltung einer zweiten Materialzuführeinrichtung 23 für eine Vorrichtung 2 zur Herstellung einer Membran-Baugruppe ähnlich der Vorrichtung gemäß Fig. 2.

Im Unterschied zu den Ausführungsbeispielen gemäß Fig. 2 und 4 wird bei der Materialzuführeinrichtung 23 gemäß Fig. 5 das zweite Rahmenmaterial 120 ohne Trägerbahn oder Schutzfilm bereitgestellt.

Die dargestellte Materialzuführeinrichtung 23 umfasst eine Stanzeinrichtung 1242, die eingerichtet ist, um in das zweite Rahmenmaterial 120 das Rahmenmaterial 120 durchtrennende Konturschnitte 124 unter Entfernen von Stanzresten einzubringen.

Das zweite Rahmenmaterial 120 wird an der Materialzuführeinrichtung 23 auf die Membran 10 und das erste Rahmenmaterial 110 aufgebracht.

Um eine ausreichende Stabilisierung der so geschaffenen Membran-Baugruppe sicherzustellen, wenn diese das Vakuumtransportband 20 verlässt, ist dabei eine Laminationsstation 25 vorgesehen, an welcher eine Trägerbahn 13 mit der Membran-Baugruppe umfassend das erste Rahmenmaterial 110, die Membran-Zuschnitte 100 und das zweite Rahmenmaterial 120 laminiert wird.

Die mittels der Trägerbahn 13 stabilisierte Membran-Baugruppe kann anschließend der Fixierstation 24 umfassend die Druckwalzen 5 zugeführt werden.

In einer Ausgestaltung sind dabei zwischen der Materialzuführeinrichtung 23 und der Laminationsstation 25 weitere Stationen vorgesehen, an welchen weitere Schichten an der Membran-Baugruppe angebracht werden.

Fig. 6 zeigt eine weitere alternative Gestaltung einer zweiten Materialzuführeinrichtung 23 ähnlich Fig. 5.

Bei der Materialzuführeinrichtung 23 gemäß Fig. 6 wird das zweite Rahmenmaterial 120 ohne Trägerbahn auf einem Schutzfilm 122 bereitgestellt. Die Materialzuführeinrichtung 23 gemäß Fig. 6 umfasst eine Stanzeinrichtung 1243, um in das auf dem Schutzfilm 122 bereitgestellte Rahmenmaterial 120 von einer dem Schutzfilm 122 gegenüberliegenden Seite das zweite Rahmenmaterial 120 durchtrennende Konturschnitte 124 unter Bildung von Stanzresten 126 einzubringen, ohne den Schutzfilm 122 zu durchtrennen.

Das zweite Rahmenmaterial 120 wird an der Materialzuführeinrichtung 23 auf eine Vakuumwalze 21 unter Delamination des Schutzfilms 122 mittels einer Schutzfilm-Delaminationsstation 231 übertragen. In dem dargestellten Ausführungsbeispiel werden die Stanzreste 126 mit dem Schutzfilm 122 entfernt. Dabei ist in einer Ausgestaltung an dem zweiten Rahmenmaterial 120 an einer dem Schutzfilm 122 zugewandten Seite ein Klebeschicht aufgebracht, welche durch den Schutzfilm 122 vor dessen Delamination abgedeckt ist.

Das zweite Rahmenmaterial 120 wird auf die Membran 10 und das erste Rahmenmaterial 110 aufgebracht.

Um eine ausreichende Stabilisierung der so geschaffenen Membran-Baugruppe sicherzustellen, wenn diese das Vakuumtransportband 20 verlässt, ist dabei stromabwärts der Materialzuführeinrichtung 23 eine Laminationsstation 25 gemäß Fig. 5 vorgesehen, an welcher eine Trägerbahn 13 an der Membran-Baugruppe umfassend das erste Rahmenmaterial 110, die Membran-Zuschnitte 100 und das zweite Rahmenmaterial 120 angebracht wird.

Wie insbesondere bei der Ausgestaltung gemäß Fig. 6 erkennbar ist, dienen die Begriffe "erste" und "zweite" im Zusammenhang mit der Anmeldung lediglich zur Unterscheidung und geben keine Reihenfolge an. In einer alternativen Ausgestaltung kann das über die Vakuumwalze 21 zugeführte Rahmenmaterial 120 als erstes Rahmenmaterial bezeichnet werden, wobei Membran-Zuschnitte 100 wie schematisch durch eine gestrichelte Walze dargestellt an der Vakuumwalze 21 mit dem Rahmenmaterial 120 laminiert werden und der so geschaffene Materialverbund mit dem an dem Vakuumtransportband 20 angeordneten Rahmenmaterial 110 verbunden wird.

Die Vakuumtransporteinrichtung umfasst dabei die Vakuumwalze 21 und das Vakuumtransportband 20. In einer anderen Ausgestaltung umfasst die Vakuumtransporteinrichtung zwei Vakuumwalzen.

## Patentansprüche

1. Verfahren zum Herstellen einer Membran-Baugruppe als Rollenware, insbesondere einer Membran-Elektroden-Anordnung (MEA), umfassend:
- Bereitstellen eines ersten Materialverbunds (111) als Rollenware umfassend ein erstes Rahmenmaterial (110) und einen Schutzfilm (112), wobei in das erste Rahmenmaterial (110) von einer dem Schutzfilm (112) gegenüberliegenden Seite des Materialverbunds (111) das erste Rahmenmaterial (110) durchtrennende Konturschnitte (114) unter Bildung von Stanzresten (116) eingebracht sind, und wobei die Konturschnitte (114) eingebracht sind, ohne den Schutzfilm (112) zu durchtrennen, und
- Aufbauen der Membran-Baugruppe als Rollenware, wobei Membran-Zuschnitte (100) mit dem ersten Rahmenmaterial (110) laminiert werden,
wobei der erste Materialverbund (111) auf eine Vakuumtransporteinrichtung (20, 21) übertragen wird,
**dadurch gekennzeichnet, dass** bei oder nach einem Übertragen des ersten Materialverbunds (111) an die Vakuumtransporteinrichtung (20, 21) eine Delamination des Schutzfilms (112) mit den Stanzresten (116) von dem ersten Rahmenmaterial (110) erfolgt, und vor oder bei einem Verlassen des Vakuumtransporteinrichtung (20, 21) eine Lamination der Membran-Baugruppe mit einer geschlossenen Trägerbahn (13) erfolgt.

2. Verfahren nach Anspruch 1, **dadurch gekennzeichnet, dass** der erste Materialverbund (111) mit dem ersten Rahmenmaterial (110) unmittelbar auf die Vakuumtransporteinrichtung (20, 21) übertragen wird.

3. Verfahren nach Anspruch 1 oder 2, **dadurch gekennzeichnet, dass** die Vakuumtransporteinrichtung (20, 21) betrieben wird, um die Delamination des Schutzfilms (112) mit den Stanzresten (116) von dem ersten Rahmenmaterial (110) zu unterstützen, wobei insbesondere die Vakuumtransporteinrichtung (20, 21) eine Schaltleiste aufweist, welche betrieben wird, um eine Ansaugwirkung der Vakuumtransporteinrichtung (20, 21) temporär und/oder örtlich begrenzt zu reduzieren.

4. Verfahren nach Anspruch 1, 2 oder 3, **dadurch gekennzeichnet, dass** das Verfahren weiter umfasst: Bereitstellen eines zweiten bahnförmigen Materialverbunds umfassend ein zweites Rahmenmaterial (120) und die Trägerbahn (13) und Ablegen des zweiten Materialverbunds (121) auf der Membran-Baugruppe umfassend das erste Rahmenmaterial (110) und die Membran-Zuschnitte (100), wobei die Trägerbahn (13) an einer von dem ersten Rahmenmaterial (110) abgewandten Seite angeordnet wird.

5. Verfahren nach Anspruch 4, **dadurch gekennzeichnet, dass** das Bereitstellen des zweiten Materialverbunds ein Einbringen von das zweite Rahmenmaterial (120) durchtrennenden Konturschnitten (124) in das zweite Rahmenmaterial (120) umfasst, wobei (a) in den zweiten Materialverbund umfassend das zweite Rahmenmaterial (120) und die Trägerbahn (13) das Rahmenmaterial (120) durchtrennende Konturschnitte (124) unter Bildung von Stanzresten (126) von einer der Trägerbahn (13) gegenüberliegenden Seite des Materialverbunds in das zweite Rahmenmaterial (120) eingebracht werden, und wobei die Konturschnitte (124) eingebracht werden, ohne die Trägerbahn (13) zu durchtrennen, oder (b) das zweite Rahmenmaterial auf einem Schutzfilm (122) bereitgestellt wird, wobei in das zweite Rahmenmaterial (120) von einer dem Schutzfilm (122) gegenüberliegenden Seite das zweite Rahmenmaterial (120) durchtrennende Konturschnitte (124) unter Bildung von Stanzresten (126) eingebracht werden, wobei die Konturschnitte (124) eingebracht werden, ohne den Schutzfilm (122) zu durchtrennen, auf einer dem Schutzfilm (122) gegenüberliegenden Seite des zweiten Rahmenmaterials (120) die Trägerbahn (13) angebracht wird und der Schutzfilm (122) vor dem Ablegen des zweiten Materialverbunds (121) auf der Membran-Baugruppe delaminiert wird.

6. Verfahren nach Anspruch 1, 2 oder 3, **dadurch gekennzeichnet, dass** das Verfahren weiter umfasst: Bereitstellen eines zweiten Rahmenmaterials (120) und Ablegen des zweiten Rahmenmaterials (120) auf der Membran-Baugruppe umfassend das erste Rahmenmaterial (110) und die Membran-Zuschnitte (100), wobei nach dem Ablegen des zweiten Rahmenmaterials (120) eine Lamination mit der Trägerbahn (13) erfolgt.

7. Verfahren nach Anspruch 6, **dadurch gekennzeichnet, dass** das Bereitstellen des zweiten Rahmenmaterials (120) ein Einbringen von das zweite Rahmenmaterial (120) durchtrennenden Konturschnitten (124) in das zweite Rahmenmaterial (120) umfasst, wobei (a) in das zweite Rahmenmaterial (120) das Rahmenmaterial (120) durchtrennende Konturschnitte (124) unter Entfernen von Stanzresten (126) eingebracht werden, oder (b) das zweite Rahmenmaterial auf einem Schutzfilm (122) bereitgestellt wird, wobei in das zweite Rahmenmaterial (120) von einer dem Schutzfilm (122) gegenüberliegenden Seite das zweite Rahmenmaterial (120) durchtrennende Konturschnitte (124) unter Bildung von Stanzresten (126) eingebracht werden, wobei die Konturschnitte (124) eingebracht werden, ohne den Schutzfilm (122) zu durchtrennen, und der Schutzfilm (122) vor dem Ablegen des zweiten Materialverbunds (121) auf der Membran-Baugruppe delaminiert wird.

8. Verfahren nach einem der Ansprüche 4 bis 7, **dadurch gekennzeichnet, dass** die Membran-Baugruppe umfassend das erste Rahmenmaterial (110), die Membran-Zuschnitte (100) und das zweite Rahmenmaterial (120) durch Aktivieren einer an dem ersten Rahmenmaterial und/oder an dem zweiten Rahmenmaterial vorgesehenen Klebeschicht fixiert wird, wobei insbesondere an dem ersten Rahmenmaterial (110) eine Klebeschicht vorgesehen ist, welche durch die Delamination des Schutzfilms (112) freigelegt wird.

9. Vorrichtung zum Herstellen einer Membran-Baugruppe, insbesondere einer Membran-Elektroden-Anordnung (MEA), umfassend:
- eine erste Materialzufuhreinrichtung, die eingerichtet ist, um einen ersten Materialverbund als Rollenware umfassend ein erstes Rahmenmaterial (110) und einen Schutzfilm (112) bereitzustellen, wobei in das erste Rahmenmaterial (110) von einer dem Schutzfilm (112) gegenüberliegenden Seite des Materialverbunds das erste Rahmenmaterial (110) durchtrennende Konturschnitte (114) unter Bildung von Stanzresten (116) eingebracht sind, und wobei die Konturschnitte (114) eingebracht sind, ohne den Schutzfilm (112) zu durchtrennen,
- eine Laminationsstation (22), die eingerichtet ist, Membran-Zuschnitte (10) mit dem ersten Rahmenmaterial (110) zum Aufbau der Membran-Baugruppe zu laminieren, und
- eine Vakuumtransporteinrichtung (20, 21), wobei die Vorrichtung eingerichtet ist, um den ersten Materialverbund an die Vakuumtransporteinrichtung (20, 21) zu übertragen,
**dadurch gekennzeichnet, dass** an der Vakuumtransporteinrichtung (20, 21) eine Delaminationsstation (21) für eine Delamination des Schutzfilms (112) mit den Stanzresten (116) von dem ersten Rahmenmaterial (110) bei oder nach einem Übertragen des ersten Materialverbunds (111) an die Vakuumtransporteinrichtung (20, 21) vorgesehen ist, und an der Vakuumtransporteinrichtung (20, 21) eine Laminationsstation (230, 25) für eine Lamination der Membran-Baugruppe mit einer geschlossenen Trägerbahn (13) vor oder bei einem Verlassen der Vakuumtransporteinrichtung (20, 21) vorgesehen ist.

10. Vorrichtung nach Anspruch 9, **dadurch gekennzeichnet, dass** die Vorrichtung eingerichtet ist, um den ersten Materialverbund mit dem ersten Rahmenmaterial (110) unmittelbar an die Vakuumtransporteinrichtung (20, 21) zu übertragen.

11. Vorrichtung nach Anspruch 9 oder 10, **dadurch gekennzeichnet, dass** die Vakuumtransporteinrichtung (20, 21) betreibbar ist, um die Delamination des Schutzfilms (112) mit den Stanzresten (116) von dem ersten Rahmenmaterial (110) zu unterstützen, wobei insbesondere die Vakuumtransporteinrichtung (20, 21) eine Schaltleiste aufweist, welche betreibbar ist, um eine Ansaugwirkung der Vakuumtransporteinrichtung (20, 21) temporär und/oder örtlich begrenzt zu reduzieren.

12. Vorrichtung nach Anspruch 9, 10 oder 11, **dadurch gekennzeichnet, dass** eine zweite Materialzufuhreinrichtung (23) vorgesehen ist, die eingerichtet ist, um einen zweiten bahnförmigen Materialverbund (121) umfassend ein zweites Rahmenmaterial (120) und die Trägerbahn (13) bereitzustellen, wobei die zweite Materialzufuhreinrichtung (23) die Laminationsstation (230) umfasst, um den zweiten Materialverbund (121) mit der Membran-Baugruppe umfassend das erste Rahmenmaterial (110) und die Membran-Zuschnitte (10) zu lamineren, wobei die Trägerbahn (13) an einer von dem ersten Rahmenmaterial (110) abgewandten Seite angeordnet ist.

13. Vorrichtung nach Anspruch 12, **dadurch gekennzeichnet, dass** die zweite Materialzufuhreinrichtung (23) eine Stanzeinrichtung (1240, 1241) zum Einbringen von das zweite Rahmenmaterial (120) durchtrennenden Konturschnitten (124) in das zweite Rahmenmaterial (120) umfasst, wobei (a) die Stanzeinrichtung (1240) eingerichtet ist, um das Rahmenmaterial (120) durchtrennende Konturschnitte (124) unter Bildung von Stanzresten (126) von einer der Trägerbahn (13) gegenüberliegenden Seite des zweiten Materialverbunds (121) in das zweite Rahmenmaterial (120) einzubringen, ohne die Trägerbahn (13) zu durchtrennen, oder (b) die Stanzeinrichtung (1241) eingerichtet ist, um in ein auf einem Schutzfilm (122) bereitgestelltes zweites Rahmenmaterial (120) von einer dem Schutzfilm (122) gegenüberliegenden Seite das zweite Rahmenmaterial (120) durchtrennende Konturschnitte (124) unter Bildung von Stanzresten (126) einzubringen, ohne den Schutzfilm (122) zu durchtrennen, wobei an der Materialzufuhreinrichtung (23) eine Trägerbahn-Laminationsstation (231), die eingerichtet ist, um die Trägerbahn (13) auf einer dem Schutzfilm (122) gegenüberliegenden Seite mit dem zweiten Rahmenmaterial (120) zu laminieren, und eine Schutzfilm-Delaminationsstation (232), die eingerichtet ist, um den Schutzfilm (122) vor dem Ablegen des zweiten Materialverbunds (112) auf der Membran-Baugruppe zu delaminieren, vorgesehen sind.

14. Vorrichtung nach Anspruch 9, 10 oder 11, **dadurch gekennzeichnet, dass** eine zweite Materialzufuhreinrichtung (23) vorgesehen ist, die eingerichtet ist, um ein zweites Rahmenmaterial (120) bereitzustellen, und die eingerichtet ist, um das zweite Rahmenmaterial (120) auf der Membran-Baugruppe umfassend das erste Rahmenmaterial (110) und die Membran-Zuschnitte (100) abzulegen, wobei stromabwärts der zweiten Materialzuführeinrichtung die Laminationsstation (25) für eine Lamination der Membran-Baugruppe umfassend das erste Rahmenmaterial (110), die Membran-Zuschnitte (100) und das zweite Rahmenmaterial (120) mit der Trägerbahn (13) vorgesehen ist.

15. Vorrichtung nach Anspruch 14, **dadurch gekennzeichnet, dass** die zweite Materialzufuhreinrichtung (23) eine Stanzeinrichtung zum Einbringen von das zweite Rahmenmaterial (120) durchtrennenden Konturschnitten (124) in das zweite Rahmenmaterial (120) umfasst, wobei (a) die Stanzeinrichtung (1242) eingerichtet ist, um in das zweite Rahmenmaterial (120) das Rahmenmaterial (120) durchtrennende Konturschnitte (124) unter Entfernen von Stanzresten (126) einzubringen, oder (b) die Stanzeinrichtung (1243) eingerichtet ist, um in ein auf einem Schutzfilm (122) bereitgestelltes zweites Rahmenmaterial (120) von einer dem Schutzfilm (122) gegenüberliegenden Seite das zweite Rahmenmaterial (120) durchtrennende Konturschnitte (124) unter Bildung von Stanzresten (126) einzubringen, ohne den Schutzfilm (122) zu durchtrennen, und eine Schutzfilm-Delaminationsstation (232) vorgesehen ist, um den Schutzfilm (122) vor dem Ablegen des zweiten Materialverbunds (112) auf der Membran-Baugruppe zu delaminieren.

16. Vorrichtung nach einem der Ansprüche 9 bis 15, **dadurch gekennzeichnet, dass** eine Fixierstation vorgesehen ist, die eingerichtet ist, um die Membran-Baugruppe umfassend das erste Rahmenmaterial (110), die Membran-Zuschnitte (100) und das zweite Rahmenmaterial (120) durch Aktivieren einer an dem ersten Rahmenmaterial (110) und/oder an dem zweiten Rahmenmaterial (120) vorgesehenen Klebeschicht zu fixieren, wobei insbesondere an dem ersten Rahmenmaterial (110) eine Klebeschicht vorgesehen ist, welche durch die Delamination des Schutzfilms (112) freilegbar ist.

## Claims

1. A method for producing a membrane assembly as roll material, in particular a membrane electrode assembly (MEA), comprising:
- providing a first laminated material (111) as roll material comprising a first frame material (110) and a protective film (112), wherein contour cuts (114) which sever the first frame material (110) are made into the first frame material (110) from a side of the laminated material (111) opposite the protective film (112), with formation of punching residues (116), and wherein the contour cuts (114) are made without severing the protective film (112), and
- constructing the membrane assembly as roll material, wherein membrane blanks (100) are laminated with the first frame material (110),
wherein the first laminated material (111) is transferred onto a vacuum transport device (20, 21),
**characterized in that**, during or after transfer of the first laminated material (111) onto the vacuum transport device (20, 21), the protective film (112) with the punching residues (116) is delaminated from the first frame material (110), and, before or when leaving the vacuum transport device (20, 21), the membrane assembly is laminated with a closed backing sheet (13).

2. The method as claimed in claim 1, **characterized in that** the first laminated material (111) with the first frame material (110) is transferred directly onto the vacuum transport device (20, 21).

3. The method as claimed in claim 1 or 2, **characterized in that** the vacuum transport device (20, 21) is operated so as to assist the delamination of the protective film (112) with the punching residues (116) from the first frame material (110), wherein, in particular, the vacuum transport device (20, 21) has a switching strip which is operated so as to reduce a suction action of the vacuum transport device (20, 21) in a temporary and/or locally limited manner.

4. The method as claimed in claim 1, 2 or 3, **characterized in that** the method further comprises: providing a second web-like laminated material comprising a second frame material (120) and the backing sheet (13), and placing the second laminated material (121) on the membrane assembly comprising the first frame material (110) and the membrane blanks (100), wherein the backing sheet (13) is arranged on a side facing away from the first frame material (110).

5. The method as claimed in claim 4, **characterized in that** the provision of the second laminated material comprises making contour cuts (124) into the second frame material (120), which contour cuts (124) sever the second frame material (120), wherein (a) in the second laminated material comprising the second frame material (120) and the backing sheet (13) contour cuts (124) which sever the frame material (120) are made into the second frame material (120) from a side of the laminated material opposite the backing sheet (13), with formation of punching residues (126), and wherein the contour cuts (124) are made without severing the backing sheet (13), or (b) the second frame material is provided on a protective film (122), wherein contour cuts (124) which sever the second frame material (120) are made into the second frame material (120) from a side opposite the protective film (122), with formation of punching residues (126), wherein the contour cuts (124) are made without severing the protective film (122), the backing sheet (13) is applied to a side of the second frame material (120) opposite the protective film (122) and the protective film (122) is delaminated before the second laminated material (121) is placed on the membrane assembly.

6. The method as claimed in claim 1, 2 or **3, characterized in that** the method further comprises: providing a second frame material (120), and placing the second frame material (120) on the membrane assembly comprising the first frame material (110) and the membrane blanks (100), wherein, after the second frame material (120) has been placed, lamination with the backing sheet (13) is effected.

7. The method as claimed in claim 6, **characterized in that** the provision of the second frame material (120) comprises making contour cuts (124) into the second frame material (120), which contour cuts (124) sever the second frame material (120), wherein (a) contour cuts (124) which sever the frame material (120) are made into the second frame material (120), with removal of punching residues (126), or (b) the second frame material is provided on a protective film (122), wherein contour cuts (124) which sever the second frame material (120) are made into the second frame material (120) from a side opposite the protective film (122), with formation of punching residues (126), wherein the contour cuts (124) are made without severing the protective film (122), and the protective film (122) is delaminated before the second laminated material (121) is placed on the membrane assembly.

8. The method as claimed in one of claims 4 to 7, **characterized in that** the membrane assembly comprising the first frame material (110), the membrane blanks (100) and the second frame material (120) is fixed by activation of an adhesive layer provided on the first frame material and/or on the second frame material, wherein, in particular, an adhesive layer which is exposed by the delamination of the protective film (112) is provided on the first frame material (110).

9. An apparatus for producing a membrane assembly, in particular a membrane electrode assembly (MEA), comprising:
- a first material feed device which is configured to provide a first laminated material as roll material comprising a first frame material (110) and a protective film (112), wherein contour cuts (114) which sever the first frame material (110) are made into the first frame material (110) from a side of the laminated material opposite the protective film (112), with formation of punching residues (116), and wherein the contour cuts (114) are made without severing the protective film (112),
- a lamination station (22) which is configured to laminate membrane blanks (10) with the first frame material (110) so as to construct the membrane assembly, and
- a vacuum transport device (20, 21), wherein the apparatus is configured to transfer the first laminated material onto the vacuum transport device (20, 21),
**characterized in that** a delamination station (21) for delamination of the protective film (112) with the punching residues (116) from the first frame material (110) during or after transfer of the first laminated material (111) onto the vacuum transport device (20, 21) is provided on the vacuum transport device (20, 21), and a lamination station (230, 25) for lamination of the membrane assembly with a closed backing sheet (13) before or when leaving the vacuum transport device (20, 21) is provided on the vacuum transport device (20, 21).

10. The apparatus as claimed in claim 9, **characterized in that** the apparatus is configured to transfer the first laminated material with the first frame material (110) directly onto the vacuum transport device (20, 21).

11. The apparatus as claimed in claim 9 or 10, **characterized in that** the vacuum transport device (20, 21) can be operated so as to assist the delamination of the protective film (112) with the punching residues (116) from the first frame material (110), wherein, in particular, the vacuum transport device (20, 21) has a switching strip which can be operated so as to reduce a suction action of the vacuum transport device (20, 21) in a temporary and/or locally limited manner.

12. The apparatus as claimed in claim 9, 10 or 11, **characterized in that** a second material feed device (23) is provided and is configured to provide a second web-like laminated material (121) comprising a second frame material (120) and the backing sheet (13), wherein the second material feed device (23) comprises the lamination station (230) in order to laminate the second laminated material (121) with the membrane assembly comprising the first frame material (110) and the membrane blanks (10), wherein the backing sheet (13) is arranged on a side facing away from the first frame material (110).

13. The apparatus as claimed in claim 12, **characterized in that** the second material feed device (23) comprises a punching device (1240, 1241) for making contour cuts (124) into the second frame material (120), which contour cuts (124) sever the second frame material (120), wherein (a) the punching device (1240) is configured to make contour cuts (124) which sever the frame material (120) into the second frame material (120) from a side of the second laminated material (121) opposite the backing sheet (13), with formation of punching residues (126), without severing the backing sheet (13), or (b) the punching device (1241) is configured to make contour cuts (124) which sever a second frame material (120) provided on a protective film (122) into the second frame material (120) from a side opposite the protective film (122), with formation of punching residues (126), without severing the protective film (122), wherein a backing sheet lamination station (231) which is configured to laminate the backing sheet (13) with the second frame material (120) on a side opposite the protective film (122) and a protective film delamination station (232) which is configured to delaminate the protective film (122) before the second laminated material (112) is placed on the membrane assembly are provided on the material feed device (23).

14. The apparatus as claimed in claim 9, 10 or 11, **characterized in that** a second material feed device (23) is provided and is configured to provide a second frame material (120) and to place the second frame material (120) on the membrane assembly comprising the first frame material (110) and the membrane blanks (100), wherein the lamination station (25) for lamination of the membrane assembly comprising the first frame material (110), the membrane blanks (100) and the second frame material (120) with the backing sheet (13) is provided downstream of the second material feed device.

15. The apparatus as claimed in claim 14, **characterized in that** the second material feed device (23) comprises a punching device for making contour cuts (124) into the second frame material (120), which contour cuts (124) sever the second frame material (120), wherein (a) the punching device (1242) is configured to make contour cuts (124) which sever the frame material (120) into the second frame material (120), with removal of punching residues (126), or (b) the punching device (1243) is configured to make contour cuts (124) which sever a second frame material (120) provided on a protective film (122) into the second frame material (120) from a side opposite the protective film (122), with formation of punching residues (126), without severing the protective film (122), and a protective film delamination station (232) is provided in order to delaminate the protective film (122) before the second laminated material (112) is placed on the membrane assembly.

16. The apparatus as claimed in one of claims 9 to 15, **characterized in that** a fixing station is provided and is configured to fix the membrane assembly comprising the first frame material (110), the membrane blanks (100) and the second frame material (120) by activation of an adhesive layer provided on the first frame material (110) and/or on the second frame material (120), wherein, in particular, an adhesive layer which can be exposed by the delamination of the protective film (112) is provided on the first frame material (110).

## Revendications

1. Procédé de fabrication d'un ensemble à membrane comme marchandise en rouleau, notamment un assemblage membrane-électrode (MEA), comprenant :
- la fourniture d'un premier matériau composite (111) sous forme de marchandise en rouleau, comprenant un premier matériau-cadre (110) et un film protecteur (112), sachant que des découpes de contour (114) perçant le premier matériau-cadre (110) sont exécutées dans le premier matériau-cadre (110) depuis un côté du matériau composite (111), opposé au film protecteur (112), en formant des chutes de perforation (116), et sachant que les découpes de contour (114) sont exécuter sans percer le film protecteur (112), et
- la constitution de l'ensemble à membrane comme marchandise en rouleau, sachant que les découpes de membrane (100) sont laminées avec le premier matériau-cadre (110),
sachant que le matériau composite (111) est transféré sur un équipement de transport par le vide (20, 21),
**caractérisé en ce que** lors d'un ou après un transfert du premier matériau composite (111) à l'équipement de transport sous vide (20, 21), le film protecteur (112) avec les chutes de perforation (116) est délaminé du premier matériau-cadre (110), et qu'avant ou lors d'une sortie de l'équipement de transport par le vide (20, 21), l'ensemble à membrane est laminé avec une bande support fermée (13).

2. Procédé selon la revendication 1, **caractérisé en ce que** le premier matériau composite (111) avec le premier matériau-cadre (110) est transféré directement sur l'équipement de transport par le vide (20, 21).

3. Procédé selon la revendication 1 ou 2, **caractérisé en ce que** l'équipement de transport par le vide (20, 21) est exploité pour assister la délamination du film protecteur (112) avec les chutes de perforation (116), du premier matériau-cadre (110), sachant que notamment l'équipement de transport par le vide (20, 21) présente une barrette de commutation qui est exploitée pour réduire temporairement et/ou localement un effet d'aspiration de l'équipement de transport par le vide (20, 21).

4. Procédé selon la revendication 1, 2 ou 3, **caractérisé en ce que** le procédé comprend également : la fourniture d'un second matériau composite en forme de bande comprenant un second matériau-cadre (120) et la bande support (13) et la dépose du second matériau composite (121) sur l'ensemble à membrane comprenant le premier matériau-cadre (110) et les découpes de membrane (100), sachant que la bande support (13) est disposée sur un côté opposé du premier matériau-cadre (110).

5. Procédé selon la revendication 4, **caractérisé en ce que** la fourniture du second matériau composite comprend une exécution des découpes de contour (124) perçant le second matériau-cadre (120), dans le second matériau-cadre (120), sachant que (a) les découpes de contour (124) perçant le matériau-cadre (120) sont exécutées dans le second matériau composite comprenant le second matériau-cadre (120) et la bande support (13), depuis un côté opposé à la bande support (13), du matériau composite, dans le second matériau-cadre (120) en formant des chutes de perforation (126), et sachant que les découpes de contour (124) sont exécutées sans percer la bande support (13), ou (b) que le second matériau-cadre est fourni sur un film protecteur (122), sachant que des découpes de contour (124) perçant le second matériau-cadre (120) sont exécutées dans le second matériau-cadre (120), depuis un côté opposé au film protecteur (122) en formant des chutes de perforation (126), sachant que les découpes de contour (124) sont exécutées sans percer le film protecteur (122), que la bande support (13) est appliquée sur un côté du second matériau-cadre (120) opposé au film protecteur (122) et que le film protecteur (122) est délaminé avant la dépose du second matériau composite (121) sur l'ensemble à membrane.

6. Procédé selon la revendication 1, 2 ou 3, **caractérisé en ce que** le procédé comprend également : la fourniture d'un second matériau-cadre (120) et la dépose du second matériau-cadre (120) sur l'ensemble à membrane comprenant le premier matériau-cadre (110) et les découpes de membrane (100), sachant qu'une lamination avec la bande support (13) a lieu après la dépose du second matériau-cadre (120).

7. Procédé selon la revendication 6, **caractérisé en ce que** la fourniture du second matériau-cadre (120) comprend une exécution des découpes de contour (124) perçant le second matériau-cadre (120), dans le second matériau-cadre (120), sachant que (a) les découpes de contour (124) perçant le matériau-cadre (120) sont exécutées dans le second matériau-cadre (120) en enlevant des chutes de perforation (126), ou (b) que le second matériau-cadre est fourni sur un film protecteur (122), sachant que des découpes de contour (124) perçant le second matériau-cadre (120) sont exécutées dans le second matériau-cadre (120), depuis un côté opposé au film protecteur (122) en formant des chutes de perforation (126), sachant que les découpes de contour (124) sont exécutées sans percer le film protecteur (122), et que le film protecteur (122) est délaminé sur l'ensemble à membrane avant la dépose du second matériau composite (121).

8. Procédé selon une des revendications 4 à 7, **caractérisé en ce que** l'ensemble à membrane comprenant le premier matériau-cadre (110), les découpes de membrane (100) et le second matériau-cadre (120) est fixé en activant une couche adhésive prévue sur le premier matériau-cadre et/ou sur le second matériau-cadre, sachant qu'est prévue, notamment sur le premier matériau-cadre (110), une couche adhésive qui est exposée par la délamination du film protecteur (112).

9. Dispositif pour fabriquer un ensemble à membrane, notamment un assemblage membrane-électrode (MEA), comprenant :
- un premier équipement de distribution de matériau qui est configuré pour fournir un premier matériau composite sous forme de marchandise en rouleau, comprenant un premier matériau-cadre (110) et un film protecteur (112), sachant que des découpes de contour (114) perçant le premier matériau-cadre (110) sont exécutées, dans le premier matériau-cadre (110) depuis un côté du matériau composite, opposé au film protecteur (112), en formant des chutes de perforation (116), et sachant que les découpes de contour (114) sont exécutées sans percer le film protecteur (112),
- une station de lamination (22) qui est configurée pour laminer des découpes de membrane (10) avec le premier matériau-cadre (110) afin de constituer l'ensemble à membrane, et
- un équipement de transport par le vide (20, 21), sachant que le dispositif est configuré pour transférer le premier matériau composite à l'équipement de transport par le vide (20, 21),
**caractérisé en ce qu'**est prévue sur l'équipement de transport par le vide (20, 21) une station de délamination (21) pour une délamination du film protecteur (112) avec les chutes de perforation (116), du premier matériau-cadre (110) lors ou après le transfert du premier matériau composite (111) à l'équipement de transport par le vide (20, 21), et qu'est prévue sur l'équipement de transport sous vide (20, 21) une station de lamination (230, 25) pour une lamination de l'ensemble à membrane avec une bande support fermée (13) avant ou lors d'une sortie de l'équipement de transport par le vide (20, 21).

10. Dispositif selon la revendication 9, **caractérisé en ce que** le dispositif est configuré pour transférer le premier matériau composite avec le premier matériau-cadre (110) directement sur l'équipement de transport par le vide (20, 21).

11. Dispositif selon la revendication 9 ou 10, **caractérisé en ce que** l'équipement de transport par le vide (20, 21) est exploitable pour assister la délamination du film protecteur (112) avec les chutes de perforation (116), du premier matériau-cadre (110), sachant que notamment l'équipement de transport par le vide (20, 21) présente une barrette de commutation qui est exploitable pour réduire temporairement et/ou localement un effet d'aspiration de l'équipement de transport par le vide (20, 21).

12. Dispositif selon la revendication 9, 10 ou 11, **caractérisé en ce qu'**est prévu un second équipement de distribution de matériau (23) qui est configuré pour fournir un second matériau composite en forme de bande (121) comprenant un second matériau-cadre (120) et la bande support (13), sachant que le second équipement de distribution de matériau (23) comprend la station de lamination (230) pour laminer le second matériau composite (121) avec l'ensemble à membrane comprenant le premier matériau-cadre (110) et les découpes de membrane (10), sachant que la bande support (13) est disposée sur un côté opposé au premier matériau-cadre (110).

13. Dispositif selon la revendication 12, **caractérisé en ce que** le second équipement de distribution de matériau (23) comprend un équipement de perforation (1240, 1241) pour exécuter dans le second matériau-cadre (120), des découpes de contour (124) perçant le second matériau-cadre (120), sachant que (a) l'équipement de perforation (1240) est configuré pour exécuter des découpes de contour (124) perçant le matériau-cadre (120) dans le second matériau-cadre (120) depuis un côté opposé à la bande support (13), du second matériau composite (121) en formant des chutes de perforation (126) et sans percer la bande support (13), ou (b) que l'équipement de perforation (1241) est configuré pour exécuter des découpes de contour (124) perçant le second matériau-cadre (120), dans un second matériau-cadre (120) fourni sur un film protecteur (122), depuis un côté opposé au film protecteur (122) en formant des chutes de perforation (126) et sans percer le film protecteur (122), sachant que sont prévues sur l'équipement de distribution de matériau (23) une station de lamination de la bande support (231) qui est configurée pour laminer la bande support (13) avec le second matériau-cadre (120) sur un côté opposé au film protecteur (122), et une station de délamination du film protecteur (232) qui est configurée pour délaminer le film protecteur (122) avant la dépose du second matériau composite (112) sur l'ensemble à membrane.

14. Dispositif selon la revendication 9, 10 ou 11, **caractérisé en ce qu'**est prévu un second équipement de distribution de matériau (23) qui est configuré pour fournir un second matériau-cadre (120), et qui est configuré pour déposer le second matériau-cadre (120) sur l'ensemble à membrane comprenant le premier matériau-cadre (110) et les découpes de membrane (100), sachant qu'est prévue en aval du second équipement de distribution de matériau, la station de lamination (25) pour une lamination de l'ensemble à membrane comprenant le premier matériau-cadre (110), les découpes de membrane (100) et le second matériau-cadre (120), avec la bande support (13).

15. Dispositif selon la revendication 14, **caractérisé en ce que** le second équipement de distribution de matériau (23) comprend un équipement de perforation pour exécuter des découpes de contour (124) perçant le second matériau-cadre (120), dans le second matériau-cadre (120), sachant que (a) l'équipement de perforation (1242) est configuré pour exécuter les découpes de contour (124) perçant le matériau-cadre (120) dans le second matériau-cadre (120) en retirant des chutes de perforation (126), ou (b) que l'équipement de perforation (1243) est configuré pour exécuter des découpes de contour (124) perçant le second matériau-cadre (120), dans un second matériau-cadre (120) fourni sur un film protecteur (122), depuis un côté opposé au film protecteur (122) en formant des chutes de perforation (126) et sans percer le film protecteur (122), et qu'est prévue une station de délamination du film protecteur (232) pour délaminer le film protecteur (122) avant la dépose du second matériau composite (112) sur l'ensemble à membrane.

16. Dispositif selon l'une des revendications 9 à 15, **caractérisé en ce qu'**est prévue une station de fixation qui est configurée pour fixer l'ensemble à membrane comprenant le premier matériau-cadre (110), les découpes de membrane (100) et le second matériau-cadre (120) en activant une couche adhésive prévue sur le premier matériau-cadre (110) et/ou sur le second matériau-cadre, (120), sachant qu'est prévue notamment sur le premier matériau-cadre (110) une couche adhésive qui est exposable par la délamination du film protecteur (112).
